# EUROPEAN PATENT APPLICATION

(11) **EP 1 926 041 A1**
(43) Date of publication of application: **28.05.2008**
(21) Application number: 06124721.9
(22) Date of filing: 24.11.2006
(51) Int. Cl.: G06Q 10/00

(54) **Configurable workflow and task management method**

(71) Applicant: Quadrat, 2640 Mortsel (BE)
(72) Inventor: De Paepe, Nadia QUADRAT, 2640, Mortsel (BE); Debels, Olivier QUADRAT, 2640, Mortsel (BE)

(57) **Abstract**

A configurable workflow and task management method to steer the workflow of a user (e.g. a doctor) in an information system used in a healthcare environment such as (but not limited to) a departmental information system (e.g. a radiology information system).

## Description

### FIELD OF THE INVENTION

The present invention relates to a configurable workflow and task management system to steer the workflow of a user (e.g. a doctor) in an information system used in a healthcare environment such as (but not limited to) a departmental information system (e.g. a radiology information system).

### BACKGROUND OF THE INVENTION

Personnel in a healthcare environment must manage a plurality of tasks. Systems for organizing, manipulating and displaying worklists of tasks to be performed by medical personnel exist. However, the existing systems are difficult to configure and lack efficient task management capabilities.

It is an object of the present invention to overcome these shortcomings.

### SUMMARY OF THE INVENTION

The above-mentioned objects are realized by a system as set out in claim 1.

Specific features for preferred embodiments of the invention are set out in the dependent claims.

The system is advantageous in that it provides explicit workflow management middleware and configuration tools to ensure that service and localization development groups can address any specific needs of a customer.
It is possible to configure the workflow behind the application externally, by using an external workflow engine which makes it not implicit part of the product, so more responsive to the market needs.
The external basic implementation of the workflow engine is an open source project (jBPM http://www.jboss.com/products/jbpm). The concept has been extended with different aspects as set out below which make it more powerful.

The system of the present invention is implemented as a computer program product adapted to carry out the steps of any of the preceding claims when run on a computer.

In one aspect the invention relates to a computer readable carrier medium comprising computer executable program code adapted to carry out the steps of any of the preceding claims.

Further advantages and embodiments of the present invention will become apparent from the following description and drawings.

### BRIEF DESCRIPTION OF THE DRAWINGS

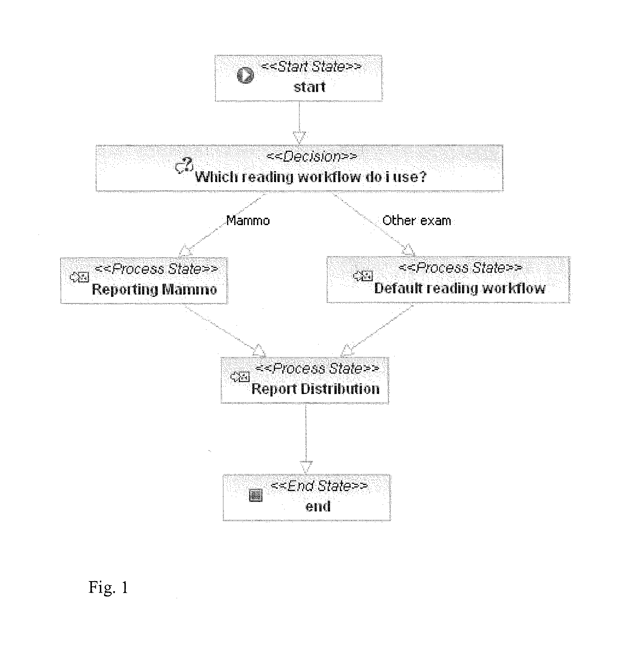

Fig. 1 shows an example of a process definition,

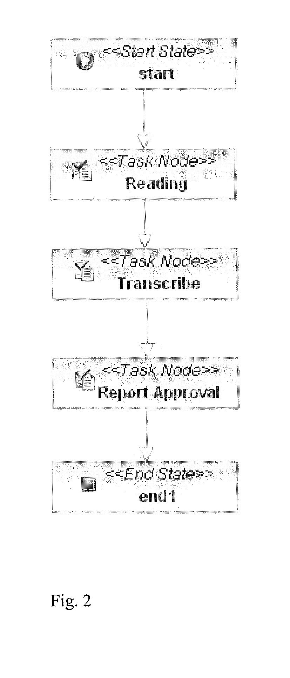

Fig. 2 is an example of a sub-process node,

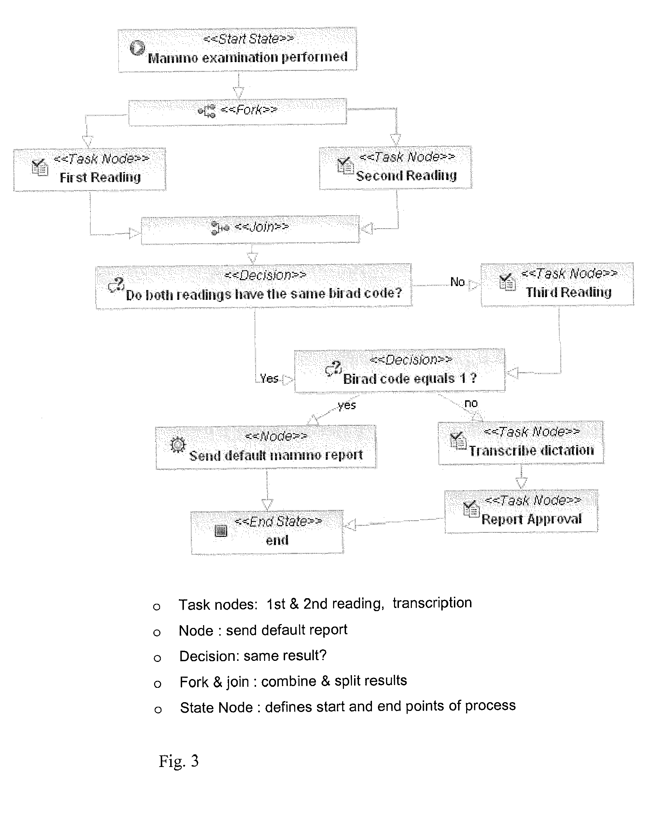

Fig. 3 is an example of workflow definition components,
Fig. 4 is an illustration of the use of assignment logic,
Fig. 5 shows how task packages are stored in a database,
Fig. 6 shows how assignment rules are stored in a database.

### DETAILED DESCRIPTION OF THE INVENTION

### Conceptual solution

The work of users such as radiologists (and automated systems) is steered by task lists that are populated and managed by a workflow management system. Each workflow participant gets a task list that is tailored to his/her/its responsibilities.

The flow of the client application will be driven by task instances. A task is an object which is generated by the workflow, and which can be performed by a person.

Examples of tasks are:
- Receptionist starts with service request
- Technician takes images when service request is made
- Radiologist does reading when images are available

In this example, 3 tasks will be generated:
- Service request creation
- Image acquisition
- Reading

The user gets the different tasks which he needs to execute, and can choose to execute them in a specific order. When executed, the task gets completed and the next step in the workflow will be evaluated and generates a new task.
The list of task instances is continuously updated using an event mechanism or by polling the list from time to time. The second option can be used when deploying the server behind a firewall.

Next to the tasks executed by a person, some automated actions will also be triggered which are also part of the workflow configuration, and does not require any human interaction, eg. printing, ...

The workflow configuration is done using different process definitions, which are all linked together.
A process definition is a formal description of a business process or procedure.
Every time, the workflow is restarted a new process instance will be created. A process instance is one execution of a process definition.

A process definition can contain nodes of different types :
- Task node (represents task performed by humans, when arriving on this node, a task will be created)
- Decision node
- Fork/join nodes
- State nodes
- Subprocess nodes

Depending on the workflow configuration, the system will be steered or tasks will be created which can be executed by a human person. The basic part of the workflow configuration is implemented by using jBPM which is a Java open source workflow. (http://www.jboss.com/products/jbpm)

Part of this realisation is:
- task persistence : all tasks are stored in the database, which makes them accessible for all workflow participants
- Workflow versioning: process definitions are versioned, which makes it possible to change existing configuration without disturbing running instances.

The creation of task nodes is part of the present invention and is different from the one from jbPM (Java open source workflow), and will be used to hook in all other aspects of the workflow engine which are not part of the open source project, but an implementation according to this invention.

Setup of these process definitions, and all other workflow aspects, described in the paragraphs below will be done in a graphical tool, which is part of the present invention and which gives the user the possibility to configure all different workflow aspects in an ordered way.

This configuration also includes the prioritization and grouping of the tasks, and forces the user to react upon high priority tasks without user interaction.

**The following is a list of possible operations on (existing) tasks:**
**Starting a task:** The user starts working on a task.
**Delegating a task:** The user forwards the responsibility to another (specified) user/system. A user can also delegate an already started task. This is done by changing the assignment, as described in the paragraph headed 'Assignment logic'.
**Rejecting a task:** The user indicates he/she does not want to perform the task (and thus should be removed from his/her task list). This is done by following an exception workflow, as described in the paragraph headed 'Exception workflows'.
**Canceling a task:** The user indicates that this task will not be performed, and should no further be considered.
**Registering a task failure:** The task may fail due to external reasons, it is impossible to successfully perform this task, i.e. because the target data is not longer available. This kind of registration will mostly be done by the application system, i.e. as result of a task integrity check. But, in some cases it might also be done by a user. This is also solved by following an exception workflow, as described in the paragraph headed 'Exception workflows'.
**Completing a task:** The user indicates he/she has successfully finished the task. This might also occur implicitly, i.e. when the user closes some screen that was needed to perform the task. In that case, it's the client application that recognizes that indeed the task was successfully completed.

### * Assignment logic:

### Conceptual solution

The user must be capable to filter the list of task instances, by which he can limit the task instances to the ones he is interested in at a specific moment.

For example: the user wants to see task instances assigned to him with the extra constraints:
- only task instances for reading a CR or
- only task instances with high priority for reading a CR (computed radiography) of patients which are treated by a certain doctor.
There are 2 possibilities to limit this list of task instances:
- The user specifies one ore more filters on his task instances
- Task assignment happens more fine-grained. For example, task assignment is done to a 'reading CR of patients which are treated by a certain doctor'. Only users which log in as interested in 'reading CR of patients which are treated by a certain doctor' will receive the task instances.
A combination of the two options must be possible :
- The user must be capable to filter the list of task instances
- Each task instance will be assigned to a responsible
- A responsible can be :
   - a user, e.g. Peter does all CT readings
   - a responsibility, e.g. a group of physicians who read all CT exams (and this group of physicians is not the same as the role, so all radiologist)
- Each user can take up one or more responsibilities, eg. Peter can do all CT readings + all RX reading + report approvals, ...

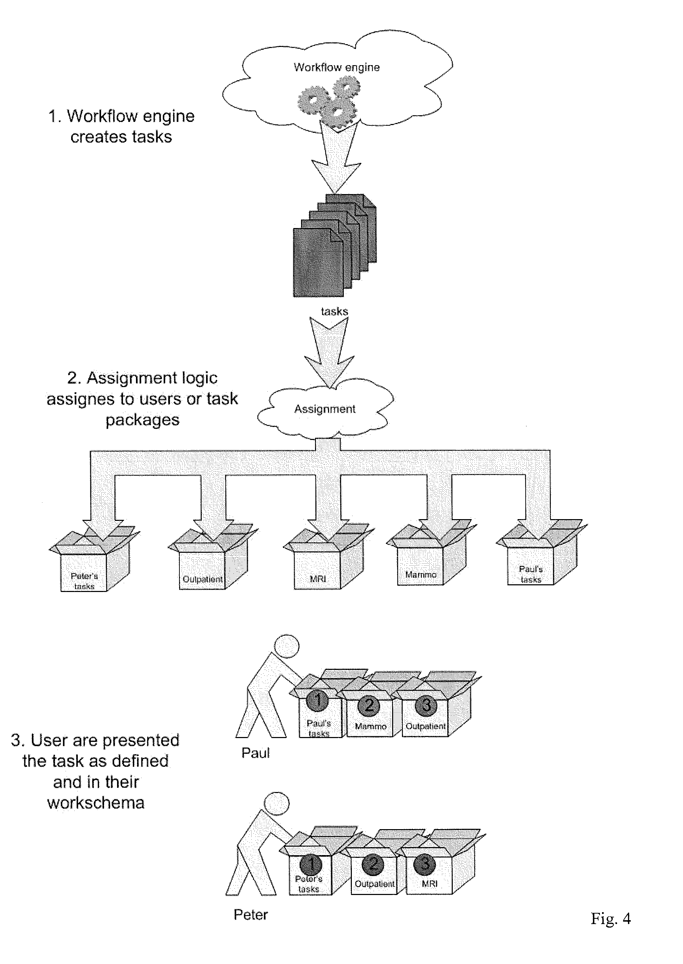

This is illustrated in figure 4.
This logic is not part of the open source project and will be implemented, by the following solution.

### Realisation

The assignment of task instances to a responsible is done using assignment rules which can be configured using a designer tool. This is an own created designer tool, not part of the basic workflow configurator available by jBPM.

Firstly the possible task packages must be defined. The task package defines which kind of task will be taken up (eg. a reading task, an approval task), sometimes filtered with extra conditions (eg. only high priority tasks, only for patients -18)

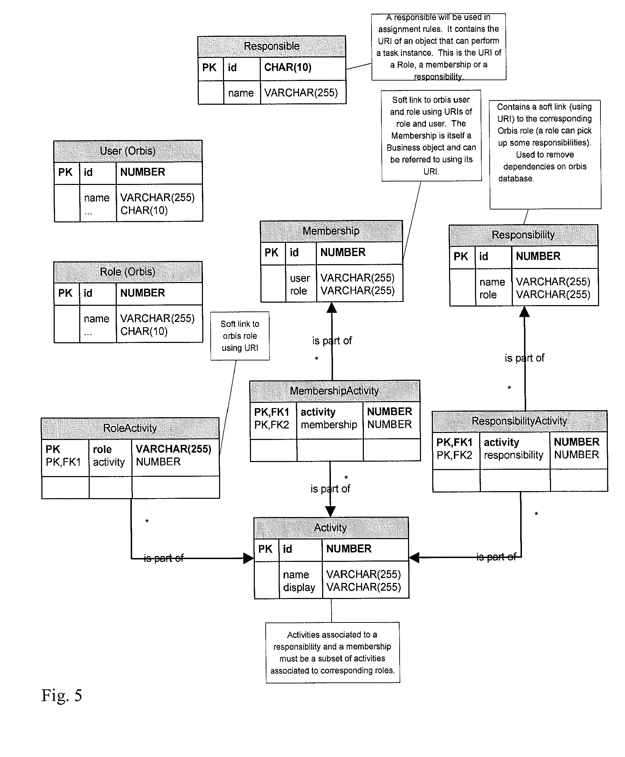

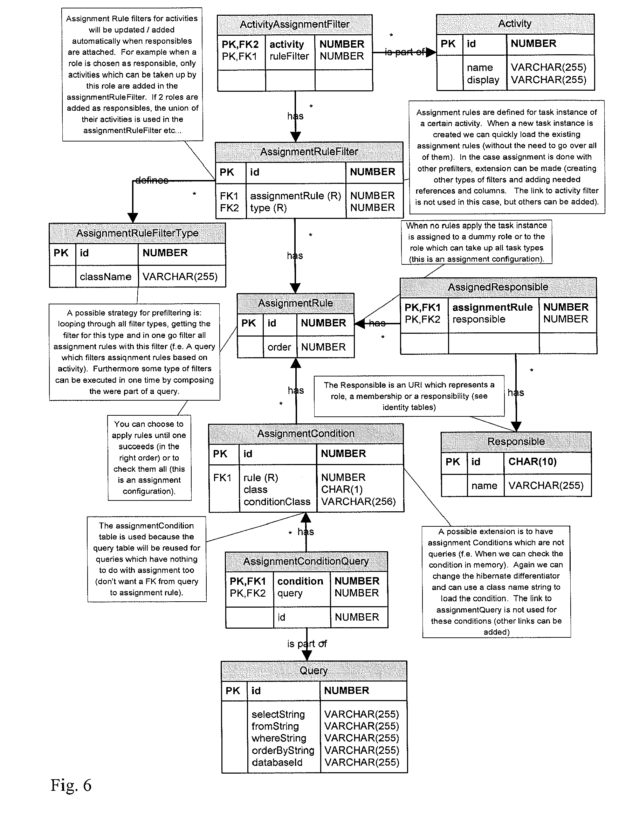

Figures 5 and 6 show how this is stored in the database.

Secondly the assignment rules need to be defined. Here we configure a subset of task instances and a responsible who can execute them.

We need to configure:
- Assignment conditions which result in a subset of task instances
   o These assignment condition can be queries by which the properties of a task instance can be checked (if the query has a result, the task instance fulfills the conditions). This can be extended to classes which check one or more properties of a task instance.
   o When the assignment conditions are saved, it will be decided if this is stored as query or an in memory filter. In a first phase only queries will be supported.
- The responsible who can execute the subset of task instances.

To improve performance, the assignment rules are pre-filtered. For example the filtering can be done on task activity (can be extended). An assignment condition is specified for one or more task activities. This can be:
- Configured explicitly during setup
- setup implicitly by considering the responsible that is attached for this rule. Each responsible has a set of allowed activities.

With the pre-filter we directly get the subset of assignment rules that need to be checked. It is important that the pre-filter is able to retrieve the useful assignment rules with a simple check or query. In the case of task activity pre-filtering, we query for the assignment rules which have an assignment rule filter of the right type with the necessary activities.

When none of the assignment rules apply, the task instance is assigned to a dummy role which can take up any activity. This role can be configured, but it must be capable of taking up any activity.

It is also possible to configure if we loop through all assignment rules or stop when the first one succeeds. In the second case we need to define an order (during configuration) in which the assignment rules will be executed.

When a task instance is assigned to a responsibility, it will or will not be assigned to its corresponding role based on these configuration settings.

Figure 6 shows how the assignment rules are stored in the database.

### * Level above the software data to steer the workflow

### Conceptual solution

By using tasks, we introduce a level above the data, which can replace different functionalities which are now used for workflow.

The software has the possibility to react upon the availability and statuses of tasks to make some conclusions on possible actions, without actually forcing the user to register in the system what he is doing.

### Example: possibility to configure in the workflow when a task is created:

- for US exams, task is available after creation of service request
- for other exams, the tasks are created after images are available

### Example of "dictation interlock" problem:

- In case of 3 radiologists who are responsible for CT's, there is now an agreement in hospitals that one radiologist starts on the top of the list, the other one at the bottom, the 3rd one somewhere in the middle?
- First thing they need to do when looking at the study, is indicating that they are busy... by changing the status of the study to 'Dictation Started', although you're not yet dictating, only looking at the study.
- When using a workflow engine, the task will be put in progress when executing it, so there is no need for an explicit action to indicate that you are busy.
- When radiologist decides to skip this study, the task is automatically set back, so no need to reset the status to 'New' again

### Realisation

Tasks are explicitly stored in the database, so they can be seen by other workflow participants. Since they have status changes, and are linked to the related objects, more info can be gathered around progress and current user interaction without explicitly changing something to the objects itself, with opens new opportunities in the client application, which reacts on the tasks.

### * Resuming tasks

### Conceptual solution

It is possible to stop in the middle of task execution and resume the pending task later. The data of the task is maintained, and the task can be resumed later. This allows the user to interrupt his work and continue later, but does not have impact on the existing system, which mostly triggers a lot of further steps when certain data is entered.

### Realisation

This will be worked out using the Memento design pattern, and maintaining the task with its respective state in the database. The task will get a specific status, which differentiates it from all other tasks occurring in the database.

### * Escalation workflows

### Conceptual solution

An escalation workflow is triggered on certain moments in time or depending on other actions. It monitors the system on configurable conditions, and reacts upon it, with configurable reactions. These reactions can trigger extra workflows, or have impact on assignment logic, on priorities, ...

### Examples :

- High priority task which is not performed within 1 hour gets re-assigned to chief radiologist, or to another radiologist which is logged in
- All tasks for report creation with priority `medium' become a high priority task when not executed within 1 day
- When there are more then 100 'reading' tasks which at not started, mail a report to the chief radiologist and send him an sms reminder, so he can take actions...

### Realisation

This can be worked out using a system which monitors the existing task instances and process definitions, and uses own process definitions for the reaction. The conditions will be based on a rule based system, the reaction bases on new process definitions or on extra rules, which could be assignment rules, but also other kinds of rules.

### * Exception workflows

### Conceptual solution

An exception workflow is triggered on certain moments when a task is not completed (because if fails, or because it has been manually rejected). It monitors the system on failed tasks and reacts upon it, with configurable reactions. These reactions can trigger extra workflows, or have impact on assignment logic, on priorities, ...

### Examples :

When printer fails, there is an alternative workflow started to another printer or mailing
When patient is too heavy to fit into modality, receptionist is notified to change procedure from CT to RX
Reading of study has been rejected since the radiologist does not like to look at the images of his relatives

### Realisation

This can be implemented using different systems:
It can explicitly be modeled in the existing workflow configuration, and already react on certain state changes, or it can be a system which monitors the existing task instances and process definitions, and also uses own process definitions for the reactions. The conditions will be based on a rule based system, the reaction bases on new process definitions or on extra rules, which could be assignment rules, but also other kinds of rules.

### * Usage of work schemes

### Conceptual solution

The tasks which are made available can be combined in different task packages. A work schema consists out of different task packages, eventually with extra filters on it, and can be chosen by the user manually or automatically.

A workscheme defines how a particular user or system's work-list should be populated at each moment in time. A workscheme specifies which tasks must be part of the work-list, as well as how these should be prioritized and combined.

A task package is an element out of work-scheme, which represents a detailed kind of tasks.
A task package typically represents tasks that are of a certain type and that also have data that fulfills a certain criterion. (Thus, a task-package can be more specific then a task-type alone.)
- Workscheme examples
   - Workscheme 1
      - Dictation CT findings
      - Dictating RX findings
      - Report approval
   - Workscheme 2
      - Reading US exams
      - Report approval
- Examples taskpackages
   - Reading priority MRI studies (Assembled out of the task type "reading studies", and filter criterion "only MRI studies")
   - Reading none-priority MRI studies
   - Validating new reports
   - All generic tasks
   - Generic tasks related to reports

So, workschemes are in fact combinations of tasks which will be taken up. The decision on which workscheme to be used can be done by different systems:
- Manually switching : the user can select himself another workscheme
- Depending on the agenda
   - Monday : workscheme 1
   - Wednesday PM : workscheme 2
      Example workschema's:
      - Peter's scheme on Monday morning
         a- Starting from 8h00, protocol assigning.
         b- Thereafter, first reading priority MRI studies, than reading priority CT's,
         c- Thereafter, reading none-priority MRI studies, and than none-priority CT's
         d- Thereafter, but no later then 11h30: signing off reports. (taking priority over tasks of line c)
- Integrated with the hospital roster system, which gives an indication of the availability of the user

### Realisation

The implementation of workscheme's is done using an own implementation. A datamodel can be created to store the different tasktypes, task packages, workscheme and workschema component and business logic is used to steer the different workschema's. The system can be linked to an agenda. In case of a roster system, an integration with an existing roster system is made.

### * Loadbalancing

### Conceptual solution

When assigning tasks to different responsibles (as explained higher in the paragraphs regarding Assignment logic), the division of the tasks between the different responsibles can be done on a strict rule based system, but also use other alternatives, like a procentual division, or a division linked to other aspects, eg. the availability of a person, as defined in the roster system or an "open" connection.

### Example of loadbalancing :

- Dr. Peter Lambert :
   - 40 % of CT readings
   - 30 % of MR reading
   - 30 % of RX readings
- Dr. Paul Logan :
   - 20 % of CT readings
   - 70 % of MR reading
   - 10 % of RX readings
- Dr. Patricia Lemmens
   - 40 % of CT readings
   - 60 % of RX readings
- Possibility to do task assignment depending on all radiologist which are logged in on that moment.
- Possibility to do the task assignment also based on the availability as defined in the roster system, e.g. when a specific person is only working half time, he should only get half as much work as his other colleague.

### Realisation

The implementation of the Assignment logic (see higher) on workflow assignment can be extended by a rule based system, which defines all these rules. Rules can be 'static', so divide based on a certain percentage, or rules can be more 'dynamic' and based on other factors, like if the user is connected to the server or not.

### * Predicting tasks

### Conceptual solution

Task lists can contain both real tasks, but also predict future tasks. Predicted tasks can (typically) not yet be performed, but do give an indication of the expected upcoming work, and allow the manager to react upon this.

### Realisation

This is realized by a system which monitors the existing task instances and process definitions, and interprets the existing process definitions to calculate the number of work to expect.

### * User definable tasks

### Conceptual solution

The user must be able to interfere between all task instances of the client application, with own created tasks. These tasks have 2 origins:
o An ad-hoc task: The user can create an own tasks which is mixed in his tasklist and can be completed by him or by his colleague. This task is typically a task which needs to be taken up, executed manually and put manually on completed.
o Starting a new process definition: The user can start a new process definition, which has been prepared already in the workflow configuration. When the user starts this, a task will be generated according to the process definition, and can eventually evolve in multiple tasks (if defined in the process definition) and follow the other additional workflow aspects, like assignment, escalation workflows, ...

### Realisation

This can be handled by working out in the client application the possibility to create these new tasks, and add them in the same database model as the other tasks. There will be a difference made in process definitions, so it is clear which ones are intended to be triggered manually.

Having described in detail preferred embodiments of the current invention, it will now be apparent to those skilled in the art that numerous modifications can be made therein without departing from the scope of the invention as defined in the appending claims.

## Claims

1. A computer implemented method for generating a workflow for a user in an information system for a healthcare environment
wherein a workflow engine generates a number of task lists for a user,
the method comprising the steps of
- configuring a workflow,
- generating for a user a list of tasks tailored to his responsibilities, a task being an object generated by said workflow engine which can be performed by said user,
- evaluating the next step in the workflow if a task is executed and generating a new task from the workflow for said user.

2. A method according to claim 1 wherein said workflow is configured by using linked process definitions, a process definition being a formal description of a business process or procedure and wherein depending on the workflow configuration, the workflow steers the creation of tasks which can be executed by a user.

3. A method according to claim 2 wherein a process definition comprises nodes of different types selected from the group of 'task node', 'decision node', 'fork/join node', 'state node', 'sub-process node'.

4. A method according to claim 1 wherein all tasks are stored in a database accessible for workflow users.

5. A method according to claim 2 wherein versioned process definitions are created.

6. A method according to claim 1 wherein possible operations on tasks are selected from the group of 'starting a task'; 'delegating a task'; 'rejecting a task'; 'canceling a task'; 'registering a task failure'; 'completing a task'.

7. A method according to claim 1 wherein tasks are assigned to a user by means of a task assignment procedure comprising defining a task package defining which tasks will be taken up by the user and defining assignment rules configuring a subset of tasks and defining a responsible who can execute said subset of tasks.

8. A method according to claim 7 wherein assignment rules are defined by configuring assignment conditions which are queries which are saved and by means of which properties of a task are checked or an in memory filter.

9. A method according to claim 6 wherein a task is delegated by changing its assignment logic.

10. A method according to claim 6 wherein a task is rejected by following an exception workflow.

11. A method according to claim 6 wherein a task failure is registered as a result of a task integrity check by the application.

12. A method according to claim 11 wherein in case a task failure is registered, an exception workflow is followed.

13. A method according to claim 6 wherein a task is completed by closing a screen visualizing data required to perform said task.

14. A method according to claim 6 wherein an exception workflow is triggered upon non-completion of a task.

15. A method according to claim 1 wherein a list of tasks is limited by specifying and applying a filter on the list of tasks.

16. A method according to claim 15 wherein configuring a subset of tasks and defining a responsible is performed by configuring assignment conditions which result in a subset of tasks, said assignment conditions being queries or in memory filters, and wherein said assignment conditions are stored.

17. A method according to claim 16 wherein the rules are pre-filtered to get a subset regarding a specific item.

18. A method according to claim 1 wherein tasks are stored in a database and an additional level is superposed on the data level, said additional level comprising status information.

19. A method according to claim 1 wherein workschemes are generated comprising a number of tasks and filters.

20. A method according to claim 1 wherein automatic actions part of the workflow configuration can be triggered.

21. A method according to claim 1 wherein said list of tasks is updated by means of an event mechanism or by polling.

22. A method according to claim 1 wherein an escalation workflow is triggered which monitors the workflow on configurable conditions and reacts upon these conditions with configurable reactions.

23. A method according to claim 22 wherein configurable reactions are selected from the group of 'an extra workflow', 'amendment of assignment logic', 'priority'.

24. A method according to claim 1 wherein said workflow engine is external to said information system.

25. A computer program product adapted to carry out the steps of any of the preceding claims when run on a computer.

26. A computer readable carrier medium comprising computer executable program code adapted to carry out the steps of any of the preceding claims.
